# EUROPÄISCHE PATENTANMELDUNG

(11) **EP 3 961 167 A1**
(43) Veröffentlichungstag der Anmeldung: **02.03.2022**
(21) Anmeldenummer: 20192872.8
(22) Anmeldetag: 26.08.2020
(51) Int. Cl.: G01K 3/00, G01K 7/42

(54) **VERFAHREN ZUR BESTIMMUNG EINER KÜHLKÖRPERVERSCHMUTZUNG MITTELS KÜNSTLICHER INTELLIGENZ**

(71) Anmelder: Siemens Aktiengesellschaft, 80333 München (DE)
(72) Erfinder: Roppelt, Bernd, 96191 Viereth-Trunstadt (DE); Schmenger, Jens, 91301 Forchheim (DE)

(57) **Zusammenfassung**

Die Erfindung betrifft ein Verfahren zur Bestimmung der Verschmutzung eines Kühlkörpers (3) zur Entwärmung mindestens eines elektronischen Bauelements (2). Es wird ein durch das Bauelement (2) gesteuerter Lastverlauf (I(t)) und mindestens ein Temperaturverlauf (ϑ₁(t), ϑ₂(t), ϑ₃(t)) entlang einer Wärmeübertragungskette von dem mindestens einen Bauelement (2) zu dem Kühlkörper (3) fortlaufend erfasst. In einer Trainingsphase (T) wird eine Entscheidungsfunktion bestimmt, die zur Anwendung auf einen Abschnitt des Lastverlaufs (I(t)) und auf mindestens einen korrespondierend erfassten Abschnitt eines Temperaturverlaufs (ϑ₁(t), ϑ₂(t), ϑ₃(t)) vorgesehen ist. In einer Klassifikationsphase (K) wird ein nicht verschmutzter Zustand des Kühlkörpers (3) dann detektiert, wenn der der Entscheidungsfunktion präsentierte Abschnitt des Lastverlaufs (I(t)) zu den in der Trainingsphase (T) erfassten Abschnitten des Lastverlaufs (I(t)) ähnlich ist und wenn der mindestens eine korrespondierende Abschnitt eines Temperaturverlaufs (ϑ₁(t), ϑ₂(t), ϑ₃(t)) ähnlich zu den in der Trainingsphase (T) korrespondierend erfassten Abschnitten des jeweiligen Temperaturverlaufs (ϑ₁(t), ϑ₂(t), ϑ₃(t)) ist.

## Beschreibung

Die Erfindung betrifft ein Verfahren zur Bestimmung der Verschmutzung eines Kühlkörpers, der zur Entwärmung von mindestens einem elektronischen Bauelement vorgesehen ist.

Leistungselektronische Geräte, beispielsweise Umrichter oder Leistungsstufen von Motoransteuerungen, sind mit Kühlkörpern versehen, von denen Wärme durch in einem Kühlkanal vorbeigeleitete Luft abgeführt wird. Zur Oberflächenvergrößerung weisen derartige Kühlkörper Kühlrippen auf, die in den Kühlkanal hineinragen und in Längsrichtung von der Luft umströmt werden.

Zur Optimierung der Entwärmung wird mit zunehmender Leistungsdichte, beispielsweise bei High-Performance Frequenzumrichtern oder Servoumrichtern, die Kühlkörperoberfläche dadurch vergrößert, dass der Abstand zwischen den Kühlrippen verringert wird. Dadurch kann eine größere Anzahl von Kühlrippen und somit auch eine größere Oberfläche für den Wärmeaustausch im Kühlkanal bereitgestellt werden.

Mit der zur Entwärmung angesaugten Luft werden unvermeidbar auch Schmutzpartikel angesaugt, die sich in dem Kühlkanal sowie zwischen den Kühlrippen ablagern. Dadurch wird die Wärmeübertragung von den Kühlrippen an die vorbeiströmende Luft verringert. Zudem kann die Strömungsgeschwindigkeit der Luft im Bereich zwischen den Kühlrippen verringert sein. Infolge dieser Schmutzablagerungen verschlechtert sich somit insgesamt die Kühlwirkung des Kühlkörpers.

Es ist dadurch möglich, dass bei einem Betriebsmodus des leistungselektronischen Geräts, der mit einer besonders hohen Verlustleistung verbunden ist, die dann anfallende Abwärme durch den Kühlkörper nicht mehr ausreichend abgeführt werden kann.

Zur Vermeidung eines Ausfalls oder einer Überhitzung des leistungselektronischen Geräts ist es somit erforderlich, den Verschmutzungszustand des Kühlkörpers regelmäßig zu untersuchen, beispielsweise durch eine manuelle Inspektion des Kühlkörpers.

Der Erfindung liegt die Aufgabe zugrunde, ein verbessertes Verfahren zur Bestimmung der Verschmutzung eines zur Entwärmung von mindestens einem elektronischen Bauelement vorgesehenen Kühlkörpers anzugeben.

Die Aufgabe wird erfindungsgemäß mit einem Verfahren mit den Merkmalen des Anspruchs 1 gelöst.

Vorteilhafte Ausgestaltungen der Erfindung sind Gegenstand der Unteransprüche.

Bei einem Verfahren zur Bestimmung der Verschmutzung eines zur Entwärmung von mindestens einem elektronischen Bauelement vorgesehenen Kühlkörpers wird für das mindestens eine elektronische Bauelement ein Lastverlauf fortlaufend erfasst.

Der Lastverlauf kann als Zeitverlauf des von dem mindestens einen elektronischen Bauelement gesteuerten Ausgangsstroms durch eine elektrische Last erfasst werden. Die elektrische Last kann beispielsweise als Elektromotor ausgebildet sein. Aber auch andere, von einem solchen Ausgangsstrom durchflossene elektrische Lasten sind möglich.

Alternativ oder zusätzlich kann der Lastverlauf als thermischer Lastverlauf durch den Zeitverlauf von mindestens einer Temperatur erfasst werden, welche wie nachfolgend genauer erklärt entlang einer Wärmeübertragungskette von dem mindestens einen elektronischen Bauelement an den Kühlkörper gemessen wird.

Durch mindestens einen Temperatursensor wird mindestens ein Temperaturverlauf erfasst, der den Zeitverlauf einer Temperatur entlang einer Wärmeübertragungskette von dem mindestens einen Bauelement an den Kühlkörper angibt. Der Temperatursensor kann in unmittelbarer Nähe zu dem mindestens einen elektrischen Bauelement angeordnet sein, beispielsweise auf einem Substrat, das das mindestens eine elektrische Bauelement trägt. Es ist aber auch möglich, einen Temperatursensor an dem Kühlkörper oder an einer Wärmebrücke zwischen dem mindestens einen Bauelement und dem Kühlkörper anzuordnen.

In einer Ausführungsform mit mehreren Temperatursensoren wird ein thermischer Lastverlauf aus mindestens einer Temperaturdifferenz bestimmt, welche entlang der Wärmeübertragungskette zwischen verschiedenen Temperatursensoren ermittelt wird und welche abhängig von dem entlang der Wärmeübertragungskette übertragenen Wärmestrom ist. Der thermische Lastverlauf wird anhand einer Differenz zwischen einem ersten Temperaturverlauf, der mit einem ersten Temperatursensor erfasst wird, und mindestens einem weiteren Temperaturverlauf, der mit je einem weiteren Temperatursensor erfasst wird, ermittelt.

Dadurch ist es möglich, einen Lastverlauf auch ohne Messung einer elektrischen Kenngröße zu erfassen.

In einer Trainingsphase werden an einem nicht verschmutzten Kühlkörper Lernabschnitte, das heißt: Zeitintervalle innerhalb der Trainingsphase, bestimmt. Die Lernabschnitte werden so bestimmt, dass der Lastverlauf, der jeweils innerhalb eines solchen Zeitintervalls oder Lernabschnitts erfasst wird, zu dem Lastverlauf in anderen Lernabschnitten eine große Ähnlichkeit aufweist. Aus der Mehrzahl solcher zueinander ähnlichen Lastverlaufsabschnitte wird ein dazu ebenfalls ähnlicher prototypischer Lastprofilabschnitt ermittelt.

Insbesondere werden Lernabschnitte so bestimmt, dass Lastverläufe in Lernabschnitten zueinander eine größere Ähnlichkeit aufweisen als zu Lastverläufen außerhalb von Lernabschnitten und/oder eine größere Ähnlichkeit aufweisen als Lastverläufe in willkürlich gewählten Zeitintervallen der Trainingsphase außerhalb von solchen Lernabschnitten.

Die Trainingsphase wird in einem Einbau- und Betriebszustand durchgeführt, der für den dauerhaften Betrieb der Leistungselektronik mit dem mindestens einen elektronischen Bauelement und dem mindestens einen Kühlkörper vorgesehen ist. Insbesondere wird die Trainingsphase in einem Einbau- und Betriebszustand durchgeführt, wie er bei einem Anwender oder Nutzer der Leistungselektronik vorgefunden wird. Es ist nicht erforderlich oder vorgesehen, dass die Trainingsphase unter standardisierten Bedingungen bei einem Hersteller der Leistungselektronik durchgeführt wird.

Für jeden der Lernabschnitte wird jeweils ein Abschnitt des mindestens einen Temperaturverlaufs erfasst, der von dem mindestens einen Temperatursensor in diesem Lernabschnitt gemessen wurde.

Aus der Mehrzahl der den Lernabschnitten zugeordneten Abschnitte des Lastverlaufs und des jeweils mindestens einen Temperaturverlaufs wird eine Entscheidungsfunktion ermittelt. Diese Entscheidungsfunktion ist zur Anwendung auf einen Abschnitt des Lastverlaufs und auf mindestens einen Abschnitt eines Temperaturverlaufs, der korrespondierend zu diesem Abschnitt des Lastverlaufs erfasst wurde, vorgesehen.

Die Entscheidungsfunktion wird derart ermittelt, dass ein nicht verschmutzter Zustand des Kühlkörpers dann detektiert wird, wenn der präsentierte Abschnitt des Lastverlaufs ähnlich zu den in den Lernabschnitten erfassten Abschnitten des Lastverlaufs ist, und wenn der präsentierte mindestens eine Abschnitt eines Temperaturverlaufs ähnlich zu den in den Lernabschnitten erfassten Abschnitten des mindestens einen Temperaturverlaufs ist.

Die Entscheidungsfunktion wird ferner derart ermittelt, dass andernfalls ein verschmutzter Zustand des Kühlkörpers detektiert wird.

In einer nachfolgenden Klassifikationsphase werden Klassifikationsabschnitte derart bestimmt, dass sie Abschnitte des Lastverlaufs aufweisen, die zu mindestens einem Abschnitt des Lastverlaufs, der einem Lernabschnitt zugeordnet ist, ähnlich sind.

Mit anderen Worten: Die in der Trainingsphase ermittelten Lernabschnitte werden als Vorlage gegen den fortlaufend erfassten Lastverlauf verglichen und ein Zeitintervall in der Klassifikationsphase wird dann als Klassifikationsabschnitt segmentiert, wenn der Lastverlauf in diesem Klassifikationsabschnitt ausreichend ähnlich zu einem, bevorzugt zu einer Vielzahl von Lastverläufen ist, die in den Lernabschnitten erfasst wurden.

Die Abschnitte des Lastverlaufs und des mindestens einen Temperaturverlaufs, die jeweils einem Klassifikationsabschnitt zugeordnet sind, werden der Entscheidungsfunktion, die in der Trainingsphase ermittelt wurde, präsentiert. Mittels der Entscheidungsfunktion wird der Verschmutzungszustand des Kühlkörpers detektiert.

Ein Vorteil des erfindungsgemäßen Verfahrens besteht darin, dass mittels der Entscheidungsfunktion ermittelt wird, ob sich für näherungsweise gleiche Lastsituationen ein gegenüber der Referenzsituation in der Trainingsphase (mit nicht verschmutztem Kühlkörper) veränderter Temperaturverlauf eingestellt hat, der charakteristisch für eine Verschmutzung des Kühlkörpers ist.

Durch den Vergleich gegenüber einer Referenzsituation mit unverändertem Einbau- und Betriebszustand ist das Verfahren unabhängig gegenüber kundenspezifisch vorgenommenen Anpassungen des Einbauzustandes, beispielsweise der Klimatisierung oder Luftzufuhr oder Entlüftung. Dadurch wird eine genauere Bestimmung des Verschmutzungszustands ermöglicht als bei Verfahren, die ein vom individuellen Einbauzustand unabhängiges Kriterium für einen Last- und Temperaturverlauf anwenden.

Ein weiterer Vorteil des Verfahrens besteht darin, dass es unabhängig von einem spezifischen Kalibrier-Lastverlauf arbeitet, der im operativen Betrieb selten oder nie auftreten kann. Es ist nicht erforderlich, gezielt einen Kalibrier-Lastverlauf zu provozieren, um eine Aussage über den Verschmutzungsgrad zu gewinnen. Das erfindungsgemäße Verfahren kann daher fortlaufend und ohne zusätzlichen Kalibrier- und Betriebsaufwand eingesetzt werden. Da ein spezifischer Provokationstest nicht erforderlich ist, ermöglicht das Verfahren eine höhere zeitliche Genauigkeit bei der Detektion von Verschmutzungsereignissen im fortlaufenden Betrieb.

Ein Vorteil gegenüber manuellen Inspektionsverfahren besteht in dem verringerten Wartungsaufwand und in der zeitlich genaueren Erkennung von Verschmutzungsereignissen.

Bei einer Ausführungsform wird durch eine Mehrzahl von Temperatursensoren jeweils ein Temperaturverlauf erfasst. Durch die Mehrzahl der so erfassten Temperaturverläufe ist eine verbesserte Beurteilung des Verhaltens eines Kühlkörpers möglich, da hierbei der Einfluss des mindestens einen elektronischen Bauelements auf die Mehrzahl von Temperatursensoren genauer erfasst werden kann. Beispielsweise ist es möglich, bei näherungsweise gleich weit von dem mindestens einen Bauelement entfernten Temperatursensoren aus deren Messwerten einen mittleren Temperaturverlauf zu bestimmen.

Zudem ist es in dieser Ausführungsform möglich, durch eine Differenzbildung von Messwerten von Temperatursensoren, welche an verschiedenen Stellen entlang der Wärmeübertragungsstrecke von dem mindestens einen elektronischen Bauelement zum Kühlkörper angeordnet sind, äußere Einflüsse auf die gemessenen Temperaturverläufe zu reduzieren oder zu eliminieren.

In einer Ausführungsform wird die Entscheidungsfunktion durch Ermittlung mindestens eines prototypischen Temperaturabschnitts aus der Mehrzahl der den Lernabschnitten zugeordneten Abschnitte des mindestens einen Temperaturverlaufs gebildet.

Bei der Präsentation der zu einem Klassifikationsabschnitt jeweils zugeordneten Abschnitte des mindestens einen Temperaturverlaufs wird nach einem vorbestimmten Ähnlichkeitsmaß eine Ähnlichkeit zu dem jeweils zugeordneten prototypischen Temperaturabschnitt bestimmt.

Wenn die Ähnlichkeit unterhalb eines Schwellwertes liegt, wird ein verschmutzter Zustand des Kühlkörpers detektiert.

Die Ähnlichkeit von Signalabschnitten, beispielsweise die Ähnlichkeit zwischen Abschnitten des Lastverlaufs und zwischen Abschnitten eines Temperaturverlaufs, kann anhand von Abstands- oder Ähnlichkeitsmaßen leicht ermittelt werden. Diese Ausführungsform ist daher besonders einfach umsetzbar.

Bei einer Ausführungsform wird die Ähnlichkeit invers zur mittleren quadratischen Abweichung zwischen dem mindestens einen Temperaturverlauf und dem jeweils zugeordneten prototypischen Temperaturabschnitt bestimmt. Eine geringe quadratische Abweichung ist ein zuverlässiges und leicht zu berechnendes Maß für Ähnlichkeit von Signalabschnitten.

Bei einer Ausführungsform wird die Ähnlichkeit invers zum Betrag der maximalen zeitpunktweisen Abweichung zwischen dem mindestens einen Temperaturverlauf und dem jeweils zugeordneten prototypischen Temperaturabschnitt bestimmt. Dieses Ähnlichkeitsmaß weist eine besonders große Robustheit gegenüber Variationen in dem mindestens einen Temperaturverlauf auf. Diese Ausführungsform ist daher besonders robust gegenüber Variationen der Lastbedingungen und/oder der Klimatisierungsbedingungen.

Bei einer Ausführungsform wird die Ähnlichkeit invers zur Überschreitung eines aus dem prototypischen Temperaturabschnitt hergeleiteten Maximalwertes in dem mindestens einen Temperaturverlauf bestimmt. Bei dieser Ausführungsform geht der Verlauf (die Kurvenform) des prototypischen Temperaturabschnitts in die Ähnlichkeitsbestimmung nicht ein. Dieses Ähnlichkeitsmaß weist daher eine besonders große Robustheit gegenüber Variationen in dem mindestens einen Temperaturverlauf auf. Diese Ausführungsform ist daher besonders robust gegenüber Variationen der Lastbedingungen und/oder der Klimatisierungsbedingungen.

Bei einer Ausführungsform wird die Entscheidungsfunktion durch ein Verfahren des maschinellen Lernens bestimmt.

Mit Verfahren des maschinellen Lernens (machine learning) können komplexe Entscheidungsfunktionen ermittelt werden, zu denen wenig oder kein explizites (als Entscheidungsregeln formulierbares) Vorwissen verfügbar ist, wenn ein ausreichend großer Satz von Lerndaten verfügbar ist, die das beabsichtigte Verhalten solcher Entscheidungsfunktionen beschreiben.

Derartige Lerndaten können vorliegend in besonders großem Umfang aus dem fortlaufenden Betrieb einer Leistungselektronik gewonnen werden, indem in der Trainingsphase Signalabschnitte aus dem fortlaufend gemessenem Lastverlauf und einem oder mehreren fortlaufend gemessenen Temperaturverläufen segmentiert werden.

Mittels dieser Lerndaten kann durch ein Verfahren des maschinellen Lernens eine besonders genaue Entscheidungsfunktion zur Bestimmung der Verschmutzung eines Kühlkörpers bestimmt werden. Beispielsweise kann eine Entscheidungsfunktion bestimmt werden, welche nicht nur eine binäre Unterscheidung (verschmutzter oder nicht verschmutzter Kühlkörper), sondern eine kategoriale Bewertung (beispielsweise: nicht/wenig/mittelstark/stark verschmutzter Kühlkörper) und/oder eine numerische Bewertung (beispielsweise: Angabe einer Ausfallwahrscheinlichkeit für die Kühlfunktion oder Angabe einer Restbetriebsdauer) ermöglicht.

Es ist auch möglich, diese Entscheidungsfunktion inkrementell und/oder iterativ anzupassen. Beispielsweise kann die Entscheidungsfunktion neu angelernt werden, wenn die Einbausituation der Leistungselektronik, beispielsweise durch eine zusätzliche Klimatisierung eines Schaltschrankes, verändert wurde.

Dadurch ist eine besonders flexible, robuste und zugleich genaue Bewertung des Verschmutzungszustandes eines Kühlkörpers möglich.

Bei einer Ausführungsform des Verfahrens werden die Lernabschnitte durch Clusterung von Abschnitten des Lastverlaufs bestimmt. Als Clusterung werden Verfahren des nicht-überwachten maschinellen Lernens bezeichnet, bei denen mehrere Merkmalsvektoren durch einen prototypischen Merkmalsvektor (Prototyp) derart abgebildet werden, wobei zwei Merkmalsvektoren, die dem gleichen Prototypen zugeordnet sind, eine höhere Ähnlichkeit aufweisen, als zwei Merkmalsvektoren, die verschiedenen Prototypen zugeordnet werden.

Verfahren zur Clusterung von Signalen sind beispielsweise aus der Veröffentlichung Warren Liao, T. (2005): Clustering of time series data - a survey. In: Pattern Recognition 38 (11), S. 1857-1874. DOI: 10.1016/j.patcog.2005.01.025 bekannt.

Diese Ausführungsform ermöglicht eine besonders genaue und zuverlässige Konstruktion einer Entscheidungsfunktion zur Bestimmung der Verschmutzung. Zudem ist eine manuelle Bestimmung von Lernabschnitten bei dieser Ausführungsform nicht erforderlich.

Bei einer Ausführungsform wird die Entscheidungsfunktion durch Training eines Deep Convolutional Neural Networks mittels eines Deep Learning Lernverfahrens anhand von Merkmalsvektoren gebildet, welche aus den den Lernabschnitten jeweils zugeordneten Abschnitten des Lastverlaufs und des Temperaturverlaufs ermittelt werden.

Als Deep Convolutional Neural Networks bezeichnete Klassifikatoren und als Deep Learning bezeichnete Lernverfahren zur Anpassung solcher Klassifikatoren derart, dass eine im Sinne eines Lernfehlerkriteriums optimale Entscheidungsfunktion gebildet wird, sind aus dem Stand der Technik bekannt, beispielsweise aus der Veröffentlichung Alex Krizhevsky, Ilya Sutskever, and Geoffrey E. Hinton. 2012. ImageNet classification with deep convolutional neural networks. In: Proceedings of the 25th International Conference on Neural Information Processing Systems - Volume 1 (NIPS'12). Curran Associates Inc., Red Hook, NY, USA, 1097-1105.

Diese Ausführungsform ermöglicht eine besonders genaue und zuverlässige Bestimmung der Verschmutzung eines Kühlkörpers.

Bei einer Ausführungsform wird eine verbesserte Entwärmung eines Kühlkörpers dadurch erkannt, dass in einem Klassifikationsabschnitt ein Abschnitt mindestens eines Temperaturverlaufs erfasst und mit mindestens einem Abschnitt eines Temperaturverlaufs in mindestens einem Lernabschnitt verglichen wird, wobei die dem Klassifikationsabschnitt und dem Lernabschnitt jeweils zugeordneten Abschnitte des Lastverlaufs zueinander ähnlich sind. Eine verbesserte Entwärmung wird daraus ermittelt, dass der Temperaturverlauf in dem Klassifikationsabschnitt mindestens teilweise unter dem zugeordneten (für einen gleichen oder ähnlichen Lastverlauf ermittelten) Temperaturverlauf des mindestens einen Lernabschnitts liegt.

Dadurch ist es möglich, eine gegenüber der Trainingsphase verbesserte Entwärmung zu erkennen, die beispielsweise durch eine Reinigung des Kühlkörpers und/oder durch eine Klimatisierung der Umgebung des Kühlkörpers bewirkt sein kann.

Optional ist es bei dieser Ausführungsform des Verfahrens möglich, eine erneute Trainingsphase mit der veränderten (verbesserten) Entwärmung durchzuführen, beispielsweise mit einem frisch gereinigten Kühlkörper oder in einem nunmehr klimatisierten Schaltschrank. Dadurch wird erreicht, dass die Erkennung eines verschmutzten Kühlkörpers stets auf eine näherungsweise optimale oder mindestens gute Entwärmungssituation bezogen bleibt und somit die Empfindlichkeit des Verfahrens bei der Erkennung eines verschmutzten Kühlkörperzustandes verbessert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch eine Draufsicht einer Platine mit leistungselektronischen Bauelementen und einem Kühlkörper,
- FIG 2: schematisch eine Draufsicht auf eine Platine mit leistungselektronischen Bauelementen,
- FIG 3: schematisch einen Kalibrier-Lastverlauf und zugeordnete Kalibrier-Temperaturverläufe sowie
- FIG 4: schematisch einen Lastverlauf und zugeordnete Temperaturverläufe.

Einander entsprechende Teile sind in den Figuren mit denselben Bezugszeichen versehen.

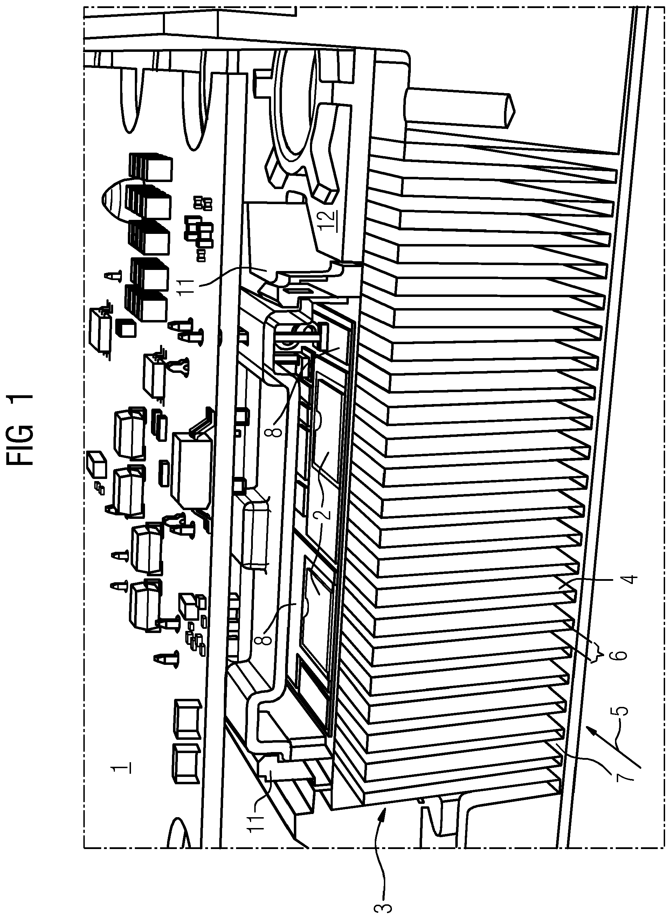

Figur 1 zeigt eine Platine 1, die mit einem Kühlkörper 3 mit leistungselektronischen Bauelementen 2 verbunden ist. Die leistungselektronischen Bauelemente 2 sind auf einem Substrat 8 zwischen der Platine 1 und dem Kühlkörper 3 angeordnet und in einem Gehäuse 11 eingefasst, das beispielsweise als ein Vergussmasserahmen ausgebildet sein kann.

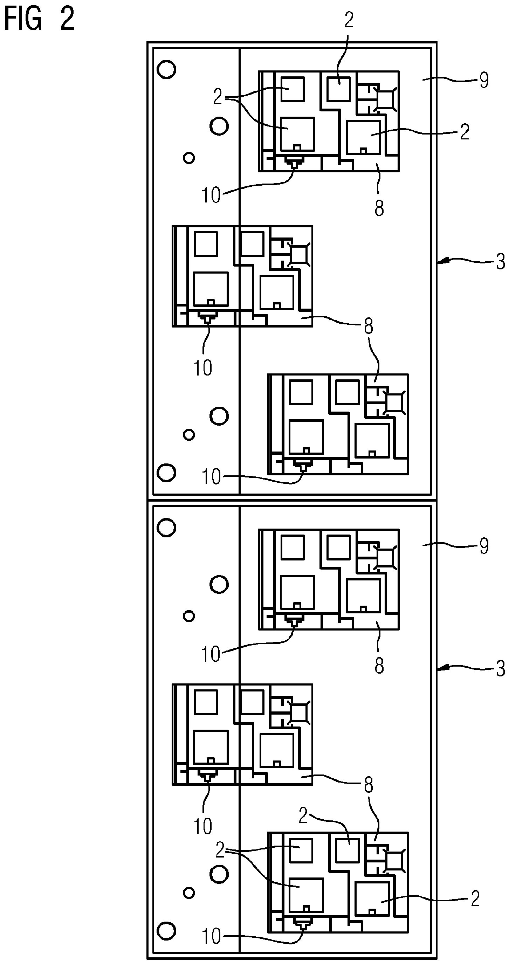

Die leistungselektronischen Bauelemente 2 sind mit dem Kühlkörper 3 wärmeleitend verbunden. Auf seiner den leistungselektronischen Bauelementen 2 zugewandten Seite weist der Kühlkörper 3 eine plane, über die gesamte Grundfläche erstreckte metallische Wärmeaufnahmeplatte 9 auf, die in Figur 2 genauer dargestellt und beschrieben ist.

Von der den leistungselektronischen Bauelementen 2 abgewandten Seite ragen aus dem Kühlkörper 3 senkrecht Kühlrippen 4 aus, die sich parallel zur Strömungsrichtung 5 der zur Kühlung durch die Kühlrippenzwischenräume 6 geleiteten Luft erstrecken. Die Gesamtheit der Kühlrippenzwischenräume 6 bildet den Kühlkanal 7.

Das Substrat 8 ist als beidseitig kupferkaschierte Keramikplatte ausgebildet und trägt auf einer Bestückungsseite die leistungselektronischen Bauelemente 2. Auf der Bestückungsseite sind entsprechend der vorgesehenen elektrischen Verbindungen zwischen den leistungselektronischen Bauelementen 2 Leiterzüge freigeätzt.

Die der Bestückungsseite gegenüberliegende Wärmekontaktseite des Substrats 8 ist vollflächig kupferkaschiert und mit der Wärmeaufnahmeplatte 9 des Kühlkörpers 3 verlötet. Es sind aber auch andere Verbindungstechniken und Anordnungen möglich, die einen geringen Wärmeübergangswiderstand zwischen den leistungselektronischen Bauelementen 2 und dem Kühlkörper 3 gewährleisten, beispielsweise durch Verschrauben oder durch formschlüssige Verbindung unter Verwendung von Wärmeleitpaste.

Die leistungselektronischen Bauelemente 2 können, abhängig von der Funktion der Leistungselektronik, beispielsweise als Bipolartransistor mit isolierter Gate-Elektrode (insulatedgate bipolar transistor, IGBT) und/oder als Diode ausgebildet und auf dem Substrat 8 angeordnet sein, wie in Figur 2 in einer schematischen Draufsicht auf die Wärmeaufnahmefläche 9 näher dargestellt ist.

Die von den leistungselektronischen Bauelementen 2 freigesetzte Verlustwärme wird durch die Keramikschicht des Substrats 8 hindurch an den Kühlkörper 3 übertragen und über dessen Kühlrippen 4 an die vorbeiströmende Luft abgegeben.

Im vorliegenden Ausführungsbeispiel sind über einer Platine 1 zwei Kühlkörper 3 angeordnet. Jeweils ein Kühlkörper 3 ist zur Entwärmung einer Mehrzahl von leistungselektronischen Bauelementen 2 eingerichtet, die auf drei gleich strukturierten und ausgebildeten Substraten 8 angeordnet sind. Auf jedem der Substrate 8 ist in unmittelbarer Nähe zu den leistungselektronischen Bauelementen 2 jeweils ein Temperatursensor 10 angeordnet.

Der Temperatursensor 10 misst die Temperatur des jeweiligen Substrats 8, die näherungsweise gleich der Temperatur der Wärmeaufnahmefläche 9 in dem von dem Substrat 8 überdeckten Bereich ist.

Ein Lastwechsel, das heißt: eine Änderung des von den leistungselektronischen Bauelementen 2 eines Substrats 8 gesteuerten Ausgangsstroms, bewirkt eine Änderung der von dem jeweiligen Temperatursensor 10 erfassten Substrattemperatur, wobei die Temperaturänderung im Allgemeinen gedämpft und verzögert gegenüber dem Lastwechsel erfolgt.

In den Zusammenhang zwischen dem Lastwechsel und der Temperaturänderung gehen unter anderem der Wärmeübergangswiderstand zwischen den leistungselektronischen Bauelementen 2 und dem Substrat 8, der Wärmeübergangswiderstand zwischen dem Substrat 8 und dem Kühlkörper 3 sowie der über den Kühlkanal 7 abtransportierte Wärmestrom ein. Dieser Zusammenhang wird daher wesentlich von der Einbausituation der Platine 1 mitbestimmt.

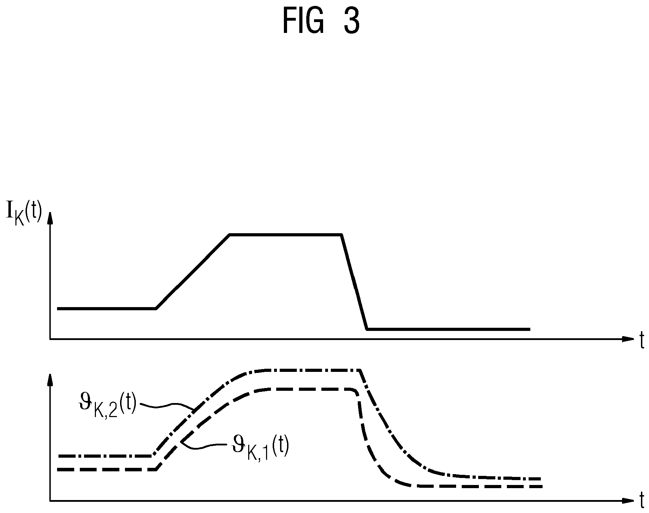

In Figur 3 sind schematisch ein Kalibrier-Lastverlauf I_{K}(t) sowie ein erster und ein zweiter Kalibrier-Temperaturverlauf ϑ_{K,1}(t), ϑ_{K,2}(t) in Abhängigkeit von der Zeit t schematisch dargestellt. Der erste Kalibrier-Temperaturverlauf ϑ_{K,1}(t) ist für eine in einem klimatisierten Schaltschrank eingebaute Platine 1 bei Beaufschlagung mit dem Kalibrier-Lastverlauf I_{K}(t) erfasst. Der zweite, davon abweichende Kalibrier-Temperaturverlauf ϑ_{κ,2}(t) ist für eine Platine 1 in nicht klimatisierter Einbaulage bei gleicher Beaufschlagung mit dem Kalibrier-Lastverlauf I_{K}(t) erfasst.

Der Kalibrier-Temperaturverlauf ϑ_{κ,1}(t), ϑ_{κ,2}(t) eines Substrats 8 kann außer von dem Kalibrier-Lastverlauf I_{K}(t) und von der Einbausituation der Platine 1 auch von der Alterung der leistungselektronischen Bauelemente 2, insbesondere der alterungsabhängig veränderlichen lastabhängigen Verlustleistung, abhängen. Zudem wird der Kalibrier-Temperaturverlauf ϑ_{K,1}(t) , ϑ_{κ,2}(t) an einem ersten Substrat 8 auch von dem Lastverlauf an anderen Substraten 8 bestimmt, die über den gleichen Kühlkörper 3 entwärmt werden.

Zudem weicht ein Lastverlauf in einem tatsächlichen Betrieb der Platine 1 typischerweise von dem Kalibrier-Lastverlauf I_{K}(t) ab. Da die Verlustleistung eines leistungselektronischen Bauelements 2, beispielsweise eines IGBT Transistors, auch von dessen Temperatur abhängt, treten bei Erwärmung Mitkopplungseffekte auf, die die Übertragung des für den Kalibrier-Lastverlauf I_{K}(t) ermittelten Kalibrier-Temperaturverlaufs ϑ_{κ,1}(t), ϑ_{κ,2}(t) auf einen anderen Lastverlauf erschweren oder unmöglich machen.

Im Allgemeinen ist es daher nicht möglich, eine durch Verschmutzung verminderte Luftströmung in einem Kühlkanal 7 oder einen durch Verschmutzung verschlechterten Wärmeübergangswiderstand zwischen einem Kühlkörper 3 und der umströmenden Luft allein aus dem Kalibrier-Temperaturverlauf ϑ_{κ,1}(t), ϑ_{K,2}(t) zu bestimmen, der mit einem Temperatursensor 10 auf einem Substrat 8 gemessen wird, dessen Bauelemente 2 dem Kalibrier-Lastverlauf I_{K}(t) ausgesetzt werden.

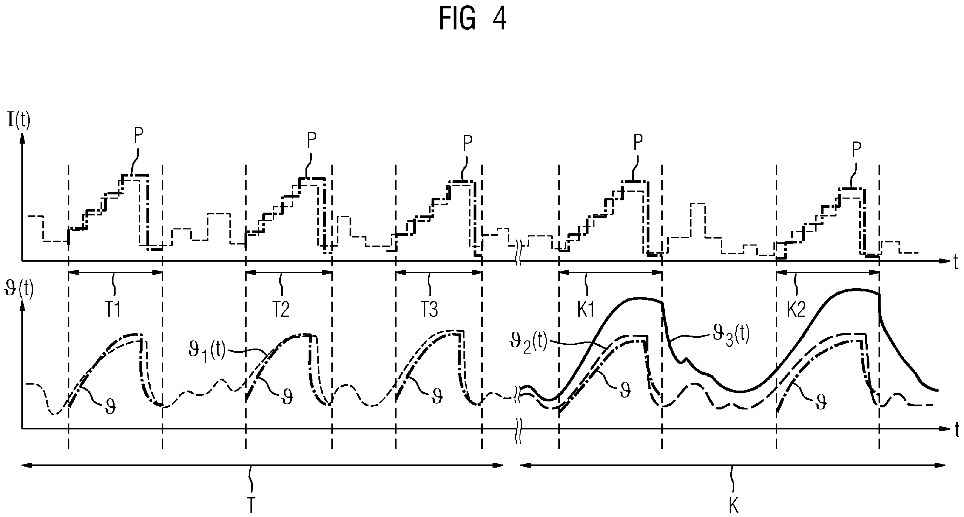

Figur 4 zeigt schematisch einen Lastverlauf I(t) während des operativen Betriebs des leistungselektronischen Geräts mit einem nicht näher bekannten Einbauzustand der Platine 1 sowie den Verlauf der an einem Temperatursensor 10 gemessenen Temperatur.

In einer Trainingsphase T wird der Lastverlauf I(t) und ein synchron gemessener erster Temperaturverlauf ϑ₁(t) erfasst. Die Trainingsphase T ist so ausgewählt und bemessen, dass Kühlkörper 3 während der Trainingsphase T nicht oder nur in einem so geringen Umfang verschmutzen, dass die Funktion der Kühlkörper 3 nicht beeinträchtigt ist.

Mittels eines nicht-überwachten maschinellen Lernverfahrens werden Lernabschnitte T1 bis T3 segmentiert, in denen der Lastverlauf I(t) näherungsweise gleich einem typischen, wiederkehrenden Lastprofilabschnitt P ist.

Bevorzugt werden Lernabschnitte T1 bis T3 derart segmentiert, dass der zugeordnete Lastprofilabschnitt P besonders häufig wiederholt auftritt und sich von anderen Abschnitten des Lastverlaufs I(t) besonders gut unterscheidet.

Es ist dabei nicht erforderlich, dass die den Lernabschnitten T1 bis T3 zugeordneten Abschnitte des Lastverlaufs I(t) zueinander und zu dem Lastprofilabschnitt P identisch sind. Es ist ausreichend, wenn diese Abschnitte nach einer vorbestimmten Abstands- oder Ähnlichkeitsmetrik eine deutlich höhere Ähnlichkeit aufweisen als willkürlich ausgewählte andere Abschnitte des Lastverlaufs I(t) zueinander, vorzugsweise eine statistisch signifikant erhöhte Ähnlichkeit.

Aus der Mehrzahl der derart segmentierten Lernabschnitte T1 bis T3 wird, beispielsweise durch Mittelung oder mittels eines Clusterverfahrens, der prototypische Lastprofilabschnitt P bestimmt.

Segmentierungs- und Clusterverfahren zur Identifizierung von Lernabschnitten T1 bis T3 und zur Ermittlung eines prototypischen Lastprofilabschnitts P sind aus dem Stand der Technik bekannt.

Jedem Lernabschnitt T1 bis T3 ist ferner jeweils ein Abschnitt des ersten Temperaturverlaufs ϑ₁(t) zugeordnet. Aus der Mehrzahl dieser Abschnitte wird, analog zur Bestimmung des prototypischen Lastprofilabschnitts, ein prototypischer Temperaturabschnitt ϑ beispielsweise durch Mittelung oder Clusterung bestimmt.

An die Trainingsphase T schließt sich eine Klassifikationsphase K an, in der der Verschmutzungszustand des Kühlkörpers 3 zunächst unbekannt ist und mit dem erfindungsgemäßen Verfahren ermittelt wird.

Hierzu werden innerhalb der Klassifikationsphase K Klassifikationsabschnitte K1, K2 derart segmentiert, dass der Lastverlauf I(t) in jedem dieser Klassifikationsabschnitte K1, K2 eine große, vorzugsweise eine statistisch signifikante Ähnlichkeit zu dem Lastprofilabschnitt P aufweist, der in der Trainingsphase T ermittelt wurde.

Jedem der Klassifikationsabschnitte K1, K2 ist zudem ein Abschnitt eines Temperaturverlaufs ϑ₂(t), ϑ₃(t) zugeordnet, der unter anderem vom Lastverlauf I(t) in und unmittelbar vor dem Klassifikationsabschnitt K1, K2 sowie von der Entwärmung des Kühlkörpers bestimmt wird.

Beispielhaft sind in Figur 4 ein zweiter Temperaturverlauf ϑ₂(t) für eine geringe Verschmutzung des Kühlkörpers 3 und ein alternativer dritter Temperaturverlauf ϑ₃(t) für einen starke Verschmutzung des Kühlkörpers 3 dargestellt.

Bei geringer Verschmutzung weicht der zweite Temperaturverlauf ϑ₂(t) in einem Klassifikationsabschnitt K1, K2, im Sinne eines vorbestimmten Abstandsmaßes, von dem ermittelten prototypischen Temperaturabschnitt ϑ nicht oder nur geringfügig ab, da der Kühlkörper 3 näherungsweise gleich gut entwärmt wird wie in der Trainingsphase T.

Bei starker Verschmutzung weicht der dritte Temperaturverlauf ϑ₃(t) in einem Klassifikationsabschnitt K1, K2 dagegen vergleichsweise stärker von dem prototypischen Temperaturabschnitt ϑ ab, da sich die Entwärmung des Kühlkörpers 3 gegenüber der Trainingsphase T verändert (verringert) hat.

Für die Bestimmung der Abweichung zwischen einem Temperaturverlauf ϑ₂(t), ϑ₃(t) in einem Klassifikationsabschnitt K1, K2 und dem prototypischen Temperaturabschnitt ϑ ist als Abstandsmaß beispielsweise die über die zeitlich gemittelte quadratische Abweichung oder das Betragsmaximum der zeitpunktweisen Abweichung möglich.

Als ein einfaches Abstandsmaß kann beispielsweise auch der Betrag der Differenz zwischen dem maximalen Temperaturwert im Klassifikationsabschnitt K1, K2 und dem maximalen Temperaturwert des prototypischen Temperaturabschnitts ϑ verwendet werden.

Auch abgeleitete Abstandsmaße sind möglich, die beispielsweise anhand von Zeitkonstanten von abklingenden Exponentialfunktionen ermittelt werden, welche an Ausschnitte des Temperaturverlaufs ϑ₂(t), ϑ₃(t) in einem Klassifikationsabschnitt K1, K2 angepasst werden.

Wie in Figur 4 dargestellt, stimmen im Allgemeinen weder der zweite noch der dritte Temperaturverlauf ϑ₂(t), ϑ₃(t) in einem Klassifikationsabschnitt K1, K2 perfekt, das heißt: deckungsgleich, mit dem prototypischen Temperaturabschnitt ϑ überein.

Geringe Unterschiede zwischen dem zweiten Temperaturverlauf ϑ₂(t) und dem prototypischen Temperaturabschnitt ϑ sind beispielsweise auf die Alterung der leistungselektronischen Bauelemente 2, auf die durch Alterung oder Degradation beispielsweise von Lötverbindungen veränderte Wärmeübertragung von einem Substrat 8 zur Wärmeaufnahmefläche 9 des Kühlkörpers 3 zurückzuführen.

Eine starke Verschmutzung der Kühlrippenzwischenräume 6 bewirkt dagegen eine vergleichsweise größere Abweichung des dritten Temperaturverlauf ϑ₃(t) von dem prototypischen Temperaturabschnitt ϑ. Insbesondere kann eine solche starke Verschmutzung zu einem steileren Temperaturanstieg bei einem Lastanstieg, einem nach oben (zu höheren Temperaturen hin) verschobenem Temperaturverlauf ϑ₃(t) und/oder einen verzögerten, flacheren Temperaturabfall bei einem Lastabfall bewirken.

Die Abweichung eines Temperaturverlaufs ϑ₂(t), ϑ₃(t) in Klassifikationsabschnitten K1, K2 kann somit mit einem Schwellwert verglichen werden. Wird ein solcher Schwellwert überschritten, so wird eine beseitigungspflichtige Verschmutzung des Kühlkörpers 3 detektiert. Es ist auch möglich, statistische Maße zur Schwellwertüberschreitung zu bestimmen. So kann eine Verschmutzung dann detektiert werden, wenn die Abweichung in einem bestimmten relativen Anteil der Klassifikationsabschnitte K1, K2 - beispielsweise in mindestens 10 % der erkannten Klassifikationsabschnitte K1, K2 - einen vorbestimmten Schwellwert überschreitet.

Es ist auch möglich, an Stelle eines oder zusätzlich zu einem solchen Schwellwertkriterium Klassifikatoren zur Erkennung und/oder zur Quantifizierung eines Verschmutzungsgrades eines Kühlkörpers 3 einzusetzen. Die Entscheidungsfunktion, das heißt: die Unterscheidung zwischen verschmutztem und nicht verschmutztem Zustand anhand eines Abschnitts eines Temperaturverlaufs ϑ₂(t), ϑ₃(t) und des korrespondierenden Abschnitts eines Lastverlaufs I(t), kann durch Anpassung eines solchen Klassifikators an die in den Lernabschnitten T1 bis T3 jeweils erfassten Abschnitte des Lastverlaufs I(t) und des Temperaturverlaufs ϑ₁(t) gebildet werden.

Die Lernabschnitte T1 bis T3 werden in Merkmalsvektoren transformiert. Ein Merkmalsvektor kann beispielsweise als Satz von Abtastwerten des Lastverlaufs I(t) und von Abtastwerten des Temperaturverlaufs ϑ₁(t) gebildet werden. Ein Merkmalsvektor kann auch oder zusätzlich spektrale Merkmale umfassen, beispielsweise eine oder mehrere Bandleistungen in vorbestimmten Frequenzbändern. Ein Merkmalsvektor kann auch oder zusätzlich statistische Merkmale umfassen, beispielsweise einen Mittelwert, eine Standardabweichung und/oder statistische Momente höherer Ordnung.

Mittels derart gewonnener Merkmalsvektoren, welche die Lernabschnitte T1 bis T3 beschreiben, wird mindestens ein Klassifikator angepasst (trainiert), indem durch einen Trainingsalgorithmus ein Lernfehlerkriterium minimiert wird.

Derartige Klassifikatoren können beispielsweise durch Anpassung einer linearen oder quadratischen Diskriminanzfunktion gebildet werden. Verfahren der linearen und quadratischen Diskriminanzanalyse sind aus dem Stand der Technik bekannt.

Derartige Klassifikatoren können auch durch Anpassung von mehrschichtigen Neuronalen Netzen gebildet werden. Deep Learning Verfahren zur Anpassung von Neuronalen Netzen mit besonders vielen verdeckten Schichten, die sich besonders gut für die Klassifikation von Signalen und Bildern eignen, sind aus dem Stand der Technik ebenfalls bekannt.

In der Klassifikationsphase K werden zu den Klassifikationsabschnitten K1, K2 Merkmalsvektoren in gleicher Weise gebildet wie zu den Lernabschnitten T1 bis T3 in der Trainingsphase T. Durch einen trainierten (angepassten) Klassifikator wird jedem dieser Merkmalsvektoren ein Klassifikationswert zugeordnet, der die Wahrscheinlichkeit und/oder den Grad einer Verschmutzung des Kühlkörpers 3 beschreibt.

Das Verfahren wurde anhand eines einzigen prototypischen Lastprofilabschnitts P erklärt, der aus einer Mehrzahl von Lernabschnitten T1 bis T3 mit ähnlichem Lastverlauf I(T) bestimmt wurde. In analoger Weise ist es aber auch möglich, aus weiteren, in Figur 4 nicht näher dargestellten Lernabschnitten weitere, ebenfalls nicht näher dargestellte prototypische Lastprofilabschnitte zu bestimmen und zur Bewertung des Verschmutzungszustandes eines Kühlkörpers 3 heranzuziehen.

Ferner wurde das Verfahren anhand eines einzigen Lastverlaufs I(t) und eines von einem einzigen Temperatursensor 10 erfassten Temperaturverlaufs ϑ₁(t), ϑ₂(t), ϑ₃(t) erklärt. Es ist aber auch möglich, dass zu einem einzigen Substrat 8, das mit einem Lastverlauf I(t) beaufschlagt wird, parallel durch Messung mit mehreren Temperatursensoren 10 eine Mehrzahl von Temperaturverläufen ϑ₁(t), ϑ₂(t), ϑ₃(t) erfasst wird. Ferner ist es auch möglich, dass verschiedene leistungselektronische Bauelemente 2 mit unabhängigen Lastverläufen I(t) beaufschlagt und parallel dazu durch Messung mit mehreren Temperatursensoren 10 eine Mehrzahl von Temperaturverläufen ϑ₁(t), ϑ₂(t), ϑ₃(t) erfasst werden.

Auch derartige multivariate Signale können in Merkmalsvektoren überführt werden, zum Training von Klassifikatoren eingesetzt werden und zur Erkennung eines Verschmutzungsgrades einem trainierten Klassifikator präsentiert werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Bestimmung der Verschmutzung eines zur Entwärmung von mindestens einem elektronischen Bauelement (2) vorgesehenen Kühlkörpers (3), wobei
- für das mindestens eine elektronische Bauelement (2) ein Lastverlauf (I(t)) fortlaufend erfasst wird,
- durch mindestens einen Temperatursensor (10) mindestens ein Temperaturverlauf (ϑ₁(t), ϑ₂(t), ϑ₃(t)) einer Temperatur entlang einer Wärmeübertragungskette von dem mindestens einen Bauelement (2) an den Kühlkörper (3) erfasst wird,
- in einer Trainingsphase (T) an einem nicht verschmutzten Kühlkörper (3) Lernabschnitte (T1 bis T3) derart bestimmt werden, dass sie zueinander und zu einem prototypischen Lastprofilabschnitt (P) ähnliche Abschnitte des Lastverlaufs (I(t)) aufweisen,
- für jeden der Lernabschnitte (T1 bis T3) jeweils ein Abschnitt des mindestens einen Temperaturverlaufs (ϑ₁(t), ϑ₂(t), ϑ₃(t)) erfasst wird,
- aus der Mehrzahl der den Lernabschnitten (T1 bis T3) zugeordneten Abschnitte von dem Lastverlauf (I(t)) und dem mindestens einen Temperaturverlauf (ϑ₁(t), ϑ₂(t), ϑ₃(t) eine Entscheidungsfunktion ermittelt wird, die zur Anwendung auf einen Abschnitt des Lastverlaufs (I(t)) und auf mindestens einen korrespondierend dazu erfassten Abschnitt eines Temperaturverlaufs (ϑ₁(t), ϑ₂(t), ϑ₃(t)) vorgesehen ist und die
o einen nicht verschmutzten Zustand des Kühlkörpers (3) dann detektiert, wenn der präsentierte Abschnitt des Lastverlaufs (I(t)) zu den in den Lernabschnitten (T1 bis T3) erfassten Abschnitten des Lastverlaufs (I(t)) ähnlich ist und wenn der mindestens eine korrespondierende Abschnitt eines Temperaturverlaufs (ϑ₁(t), ϑ₂(t), ϑ₃(t)) ähnlich zu den in den Lernabschnitten (T1 bis T3) erfassten Abschnitten des jeweiligen Temperaturverlaufs (ϑ₁(t), ϑ₂(t), ϑ₃(t)) ist und
o andernfalls einen verschmutzten Zustand des Kühlkörpers (3) detektiert,
und wobei in einer Klassifikationsphase (K)
o Klassifikationsabschnitte (K1, K2) derart bestimmt werden, dass sie Abschnitte des Lastverlaufs (I(t)) aufweisen, die zu mindestens einem einem Lernabschnitt (T1 bis T3) zugeordneten Abschnitt des Lastverlaufs (I(t)) ähnlich sind und
o die zu einem Klassifikationsabschnitt (K1, K2) jeweils zugeordneten Abschnitte des Lastverlaufs (I(t)) und des mindestens einen Temperaturverlaufs (ϑ₁(t), ϑ₂(t), ϑ₃(t) der in der Trainingsphase (T) ermittelten Entscheidungsfunktion präsentiert werden.

2. Verfahren nach Anspruch 1, **dadurch gekennzeichnet, dass** der Lastverlauf (I(t)) als Zeitverlauf eines von dem mindestens einen leistungselektronischen Bauelement 2 gesteuerten Ausgangsstroms durch eine elektrische Last erfasst wird.

3. Verfahren nach Anspruch 1, **dadurch gekennzeichnet, dass** der Lastverlauf (I(t)) als thermischer Lastverlauf anhand mindestens einer Differenz zwischen einem ersten Temperaturverlauf (ϑ₁(t)), der mit einem ersten Temperatursensor (10) erfasst wird, und mindestens einem weiteren Temperaturverlauf (ϑ₂(t), ϑ₃(t)), der mit je einem weiteren Temperatursensor (10) erfasst wird, ermittelt wird.

4. Verfahren nach einem der vorhergehenden Ansprüche, **dadurch gekennzeichnet, dass** durch eine Mehrzahl von Temperatursensoren (10) eine Mehrzahl von Temperaturverläufen (ϑ₁(t), ϑ₂(t), ϑ₃(t)) erfasst wird.

5. Verfahren nach einem der vorhergehenden Ansprüche , **dadurch gekennzeichnet, dass** die Entscheidungsfunktion durch Ermittlung mindestens eines prototypischen Temperaturabschnitts (ϑ) aus der Mehrzahl der den Lernabschnitten (T1 bis T3) zugeordneten Abschnitte des mindestens einen Temperaturverlaufs (ϑ₁(t), ϑ₂(t), ϑ₃(t)) gebildet wird und bei der Präsentation der zu einem Klassifikationsabschnitt (K1, K2) jeweils zugeordneten Abschnitte des mindestens einen Temperaturverlaufs (ϑ₁(t), ϑ₂(t), ϑ₃(t)) nach einem vorbestimmten Ähnlichkeitsmaß eine Ähnlichkeit zu dem jeweils zugeordneten prototypischen Temperaturabschnitt (ϑ) bestimmt und, wenn die Ähnlichkeit unterhalb eines Schwellwertes liegt, ein verschmutzter Zustand des Kühlkörpers detektiert wird.

6. Verfahren nach Anspruch 5, **dadurch gekennzeichnet, dass** die Ähnlichkeit invers zur mittleren quadratischen Abweichung zwischen dem mindestens einen Temperaturverlauf (ϑ₁(t), ϑ₂(t), ϑ₃(t)) und dem jeweils zugeordneten prototypischen Temperaturabschnitt (ϑ) bestimmt wird.

7. Verfahren nach Anspruch 6, **dadurch gekennzeichnet, dass** die Ähnlichkeit invers zum Betrag der maximalen zeitpunktweisen Abweichung zwischen dem mindestens einen Temperaturverlauf (ϑ₁(t), ϑ₂(t), ϑ₃(t)) und dem jeweils zugeordneten prototypischen Temperaturabschnitt (ϑ) bestimmt wird.

8. Verfahren nach Anspruch 6, **dadurch gekennzeichnet, dass** die Ähnlichkeit invers zur Überschreitung eines aus dem prototypischen Temperaturabschnitt (ϑ) hergeleiteten Maximalwertes in dem mindestens einen Temperaturverlauf (ϑ₁(t), ϑ₂(t), ϑ₃(t)) bestimmt wird.

9. Verfahren nach Anspruch 1, **dadurch gekennzeichnet, dass** die Entscheidungsfunktion durch ein Verfahren des maschinellen Lernens bestimmt wird.

10. Verfahren nach Anspruch 9, **dadurch gekennzeichnet, dass** die Lernabschnitte (T1 bis T3) durch Clusterung von Abschnitten des Lastverlaufs (I(t)) bestimmt werden.

11. Verfahren nach Anspruch 9 oder 10, **dadurch gekennzeichnet, dass** die Entscheidungsfunktion durch Training eines Deep Convolutional Neural Networks mittels eines Deep Learning Lernverfahrens anhand von Merkmalsvektoren gebildet wird, welche aus den den Lernabschnitten (T1 bis T3) jeweils zugeordneten Abschnitten des Lastverlaufs (I(t)) und des Temperaturverlaufs (ϑ₁(t), ϑ₂(t), ϑ₃(t)) ermittelt werden.

12. Verfahren nach einem der vorhergehenden Ansprüche, **dadurch gekennzeichnet, dass** eine verbesserte Entwärmung eines Kühlkörpers (3) dadurch erkannt wird, dass in einem Klassifikationsabschnitt (K1, K2) mit einem zugeordneten Abschnitt des Lastverlaufs (I(t)) ein Abschnitt eines Temperaturverlaufs (ϑ₁(t), ϑ₂(t), ϑ₃(t)) erfasst wird, der mindestens teilweise unterhalb eines Abschnittes eines Temperaturverlaufs (ϑ₁(t), ϑ₂(t), ϑ₃(t) liegt, welcher in einem Lernabschnitt (T1 bis T3) mit einem ähnlichen Abschnitt des Lastverlaufs (I(t)) erfasst wurde.
